(19) Europäisches Patentamt
European Patent Office
Office européen des brevets

(11) Veröffentlichungsnummer: **0 157 732 B1**

# (12) EUROPÄISCHE PATENTSCHRIFT

(45) Veröffentlichungstag der Patentschrift: **01.06.88**

(51) Int. Cl.[4]: **C 08 G 65/40**, C 08 G 65/48, C 08 J 3/24, C 08 J 3/28

(21) Anmeldenummer: **85810085.2**

(22) Anmeldetag: **01.03.85**

## (54) Vernetzbare, lineare Polyätherharze.

(30) Priorität: **07.03.84 CH 1123/84**

(43) Veröffentlichungstag der Anmeldung: **09.10.85 Patentblatt 85/41**

(45) Bekanntmachung des Hinweises auf die Patenterteilung: **01.06.88 Patentblatt 88/22**

(84) Benannte Vertragsstaaten: **CH DE FR GB IT LI NL**

(56) Entgegenhaltungen:
**EP - A - 0 067 976**
**GB - A - 1 357 114**
**US - A - 3 753 946**
**US - A - 3 763 101**
**US - A - 3 959 101**
**US - A - 4 269 953**

(73) Patentinhaber: **CIBA-GEIGY AG, Klybeckstrasse 141, CH-4002 Basel (CH)**

(72) Erfinder: **Eldin, Sameer H., Dr., Route de Schiffenen 10, CH-1700 Fribourg (CH)**

**EP 0 157 732 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft neue, unter Verwendung von bestimmten Bis-(hydroxyphenyl)-alkanen hergestellte Polyätherharze, die thermisch oder mittels Bestrahlung vernetzt werden können, sowie die aus diesen Polyätherharzen durch Vernetzung erhaltenen Produkte.

Polyätherharze weisen, wie auch andere Thermoplasten, neben den bekannten technischen Vorteilen vor allem den Nachteil auf, dass sie unter Last bei erhöhten Temperaturen ein ausgesprochenes Kriechverhalten zeigen und ferner gegenüber organischen Lösungsmitteln ungenügend beständig sind.

Es hat nicht an Versuchen gefehlt, diesen Mangel durch Vernetzung der Polyätherharze zu beheben, indem man die Polyätherharze durch Zugabe eines Vernetzungsmittels, wie bestimmte Biphenylenverbindungen (US-A-4269953) oder Schwefel bzw. organische Schwefelverbindungen (GB-A-1357114), vernetzt oder indem man Polyätherpolymere mit reaktiven, die Vernetzung bewirkenden Endgruppen verkappt. Als solche Endgruppen werden beispielsweise im US-A-3763101 ungesättigte alicyclische Endo-Gruppierungen und in der EP-A-0067976 Nadicimidyl-, Maleinimidyl- oder Äthinylgruppen offenbart.

Es wurde nun gefunden, dass man in einfacher Weise zu vernetzbaren Polyätherharzen gelangt, indem man α,ω-Bis-(hydroxyphenyl)-alkane mit mindestens 4 C-Atomen im Alkylenrest ganz oder teilweise zur Herstellung von Polyätherharzen einsetzt. Diese spezifischen Polylätherharze sind selbstvernetzend und gehen beim Erhitzen auf etwa 250 °C oder beim Bestrahlen mit energiereichen elektromagnetischen Strahlen in den vernetzten Zustand über.

Gegenstand der vorliegenden Erfindung sind somit vernetzbare, lineare Polyätherharze mit einer spezifischen Viskosität von 0,1 bis 2,5, gemessen bei 30 °C an einer 2%igen Lösung in Dimethylformamid, die, bezogen auf die Gesamtmenge der im Polyätherharz vorhandenen Strukturelemente, 100 bis 10 Mol-% des wiederkehrenden Strukturelementes der Formel I

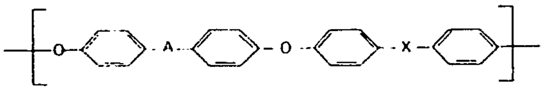 (I)

und 90 bis 0 Mol-% des wiederkehrenden Strukturelementes der Formel II

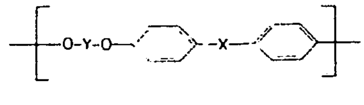 (II)

enthalten, worin A ein lineares unsubstituiertes oder methylsubstituiertes Alkylen mit 4 bis 100 C-Atomen in der linearen Alkylenkette bedeuten, X

für $-SO_2-$, -CO, -SO-, -N=N-, $-CF_2-CF_2-$, 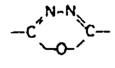,

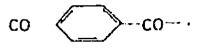

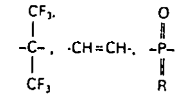

worin R ein Alkyl mit 1 bis 8 C-Atomen bedeutet, oder

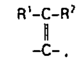

worin $R^1$ und $R^2$ je ein H- oder Halogenatom bedeuten, steht und Y einen Rest der Formel III oder IV

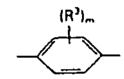 (III) oder 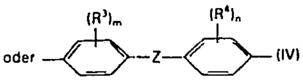 (IV)

bedeutet, worin $R^3$ und $R^4$ gleich oder verschieden sind und je ein Halogenatom, Alkyl mit 1 bis 4 C-Atomen oder Alkoxy mit 1 bis 4 C-Atomen, m und n null oder eine ganze Zahl von 1 bis 4 bedeuten und Z für eine direkte Bindung oder einen der folgenden Reste

-O-, -SO-, $-SO_2-$, -S-, -S-S-, 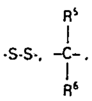,

worin $R^5$ und $R^6$ unabhängig voneinander je ein H-Atom, Alkyl mit 1 bis 4 C-Atomen oder Phenyl bedeuten,

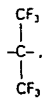, 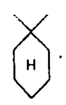, 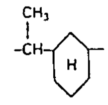 oder 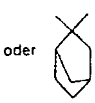 steht.

Vorzugsweise enthalten die erfindungsgemässen Polyätherharze 100 bis 20 Mol-%, insbesondere 50 bis 30 Mol-%, des wiederkehrenden Strukturelementes der Formel I und 80 bis 0%, insbesondere 70 bis 50 Mol-% des wiederkehrenden Strukturelementes der Formel II.

Die erfindungsgemässen Polyätherharze weisen ferner vorzugsweise eine spezifische Viskosität von 0,2 bis 1,5, insbesondere von 0,2 bis 1,0, auf.

Es ist allgemein bekannt, dass die spezifische Viskosität ein Mass für das Molekulargewicht von Polymeren darstellt. Die angegebenen Werte der spezifischen Viskosität von 0,1 bis 2,5 entsprechen einem durchschnittlichen Molekulargewichtsbereich von etwa 1000 bis 50000.

Der Rest A im Strukturelement der Formel I ist vorzugsweise ein unsubstituiertes Alkylen mit 4 bis 20 C-Atomen, insbesondere mit 4 bis 8 C-Atomen, in der linearen Alkylenkette.

Der Rest X in den Strukturelementen der Formeln I und II steht vorzugsweise für

$-SO_2-$, -CO-, -SO-, $-CF_2-CF_2-$, 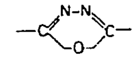, -N=N-,

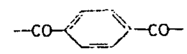 oder 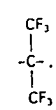,

insbesondere für $-SO_2-$ oder -CO-.

Im Strukturelement der Formel II bedeutet Y vorzugsweise einen Rest der Formel III oder IV,

worin m und n null bedeuten und Z für eine direkte Bindung oder einen der folgenden Reste

-O-, -SO-, $-SO_2-$, -S-, -S-S-, $-CH_2-$,

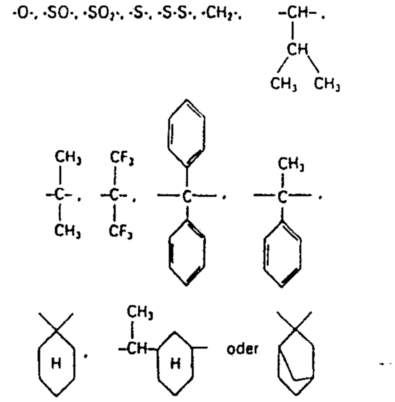

steht. Insbesondere bedeutet Y einen Rest der Formel IV, worin m und n für null stehen und Z Isopropyliden oder Methylen bedeutet.

Die erfindungsgemässen Polyätherharze können z.B. hergestellt werden, indem man eine Dihalogenverbindung der Formel V

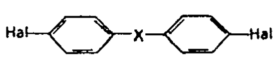 (V)

in äquimolaren Mengen mit einem α,ω-Di-(p-hydroxyphenyl)-alkan der Formel VI

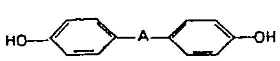 (VI)

oder mit einem Gemisch aus einer Verbindung der Formel VI und einem darin bis zu 90 Mol-%, vorzugsweise bis zu 80 Mol-%, enthaltenden Phenol der Formel VII

HO-Y-OH (VII)

worin X, A und Y die gleiche Bedeutung wie in Formel I bzw. II haben und Hal für ein Halogenatom, vorzugsweise ein Fluor- oder Chloratom, insbesondere Chloratom, steht, in Gegenwart von Alkali in einem polaren aprotischen Lösungsmittel polykondensiert, bis das erhaltene Polyätherharz eine spezifische Viskosität von 0,1 bis 2,5, gemessen bei 30 °C an einer 2%igen Lösung in Dimethylformamid, aufweist.

Die besonders bevorzugten Polyätherharze werden hergestellt, indem man eine Dihalogenverbindung der Formel V mit einem Gemisch aus 50 bis 30 Mol-% eines α,ω-Di-(p-hydroxyphenyl)-alkans der Formel VI und 70 bis 50 Mol-% eines Phenols der Formel VII in äquimolaren Mengen polykondensiert.

Unter äquimolaren Mengen versteht man in diesem Zusammenhang ein Molverhältnis von etwa 0,8 bis 1,2.

Die Polykondensationsreaktion wird vorzugsweise bis zu einer spezifischen Viskosität von 0,2 bis 1,5, insbesondere 0,2 bis 1,0 der Polyätherharze durchgeführt.

Vorzugsweise führt man das Verfahren ferner in Gegenwart eines Schleppmittels, zum Beispiel Chlorbenzol, durch, um das bei der Umsetzung gebildete Wasser azeotrop aus dem Reaktionsgemisch entfernen zu können.

Als Alkali verwendet man bei dem Verfahren in der Regel starke Alkalien, wie festes Natriumhydroxid oder wässrige Natronlauge, doch können auch andere alkalische Reagentien, wie Kaliumhydroxid, Bariumhydroxid, Calciumhydroxid, Natrium- oder Kaliumcarbonat, Verwendung finden.

Polare, aprotische Lösungsmittel, die beim Verfahren zur Herstellung der erfindungsgemässen Polyätherharze eingesetzt werden können, sind beispielsweise Dimethylsulfoxid, Dimethylacetamid, Diäthylacetamid, Tetramethylharnstoff, N-Methylcaprolactam, N-Methylpyrrolidon, Aceton, Dioxan, Essigester und Tetrahydrofuran.

Die Dihalogenverbindungen der Formel V sind bekannt und zum Teil im Handel erhältlich. Geeignete Verbindungen der Formel V sind beispielsweise 4,4'-Dichlordiphenylsulfon, 4,4'-Difluordiphenylsulfon, 4,4'-Dichlordiphenylsulfoxid, 4,4'-Dichlorbenzophenon, 4,4'-Dichlorazobenzol, 1,2-Bis-(p-chlorphenyl)-tetrafluoräthan und 2,2-Bis-(p-fluorphenyl)-hexafluorpropan.

Die Phenole der Formel VII stellen ebenfalls bekannte, zum Teil im Handel erhältliche Verbindungen dar. Beispiele für geeignete zweiwertige Phenole, die beispielsweise zur Herstellung der erfindungsgemässen Polyätherharze eingesetzt werden können, sind Hydrochinon, Methylhydrochinon, 2,3-Dimethylhydrochinon, 4,4'-Dihydroxydiphenyl, Bis-(4-hydroxyphenyl)-äther, 4,4'-Dihydroxy-2,6-dimethyldiphenyläther, Bis-(4-hydroxy-3-isobutylphenyl)-äther, Bis-(4-hydroxy-3-isopropylphenyl)-äther, Bis-(4-hydroxy-3-chlorphenyl)-äther, Bis-(4-hydroxy-3-fluorphenyl)-äther, Bis-(4-hydroxy-3-bromphenyl)-äther, 4,4'-Dihydroxy-3,6-dimethoxydiphenyläther, 4,4'-Dihydroxy-2,5-diäthoxydiphenyläther, Bis-(4-hydroxyphenyl)-sulfon, 5'-Chlor-4,4'-dihydroxydiphenylsulfon, Bis-(4-hydroxyphenyl)-methan (Bisphenol F), Bis-(4-hydroxy-2,6-dimethyl-3-methoxyphenyl)-methan, 2,2-Bis-(4-hydroxyphenyl)-propan (Bisphenol A), 2,2-Bis-(3-methyl-4-hydroxyphenyl)-propan, 2,2-Bis-(3-phenyl-4-hydroxyphenyl)-propan, 2,2-Bis-(3-isopropyl-4-hydroxyphenyl)-propan, 2,2-Bis-(2-isopropyl-4-hydroxyphenyl)-propan, 2,2-Bis-(3,5-dibrom-4-hydroxyphenyl)-propan, 2,2-Bis-(4-hydroxyphenyl)-pentan, 3,3-Bis-(4-hydroxyphenyl)-pentan, Bis-(4-hydroxyphenyl)-phenylmethan, 2,2-Bis-(4-hydroxyphenyl)-1-phenylpropan und 2,2-Bis-(4-hydroxyphenyl)-1,1,1,3,3,3-hexafluorpropan.

Die α,ω-Di-(p-hydroxyphenyl)-alkane der Formel VI sind zum Teil bekannte Verbindungen. Soweit es sich um neue Verbindungen handelt, bilden sie ebenfalls einen Gegenstand der Erfindung. Die α,ω-Di-(p-hydroxyphenyl)-alkane mit 9 oder 11 und mehr C-Atomen im linearen Alkylenrest sind in der Literatur noch nicht beschrieben worden.

Die Verbindungen der Formel VI können z.B. nach dem in «The Journal of the American Chemical Society», Band 62 (1940), Seite 413–415, offenbarten Verfahren hergestellt werden, indem man ein lineares unsubstituiertes oder methyl-substituiertes Alkandicarbonsäuredichlorid mit 2 bis 98

C-Atomen in der linearen Alkylenkette im Molverhältnis von 1:2 mit einem Alkylphenyläther, z.B. Anisol oder Phenetol, unter HCl-Abspaltung zur entsprechenden Diketonverbindung kondensiert, danach die beiden Ketogruppen zu Methylengruppen hydriert und anschliessend die beiden Alkoxygruppen hydrolysiert.

Geeignete Alkan-dicarbonsäuredichloride zur Herstellung der α,ω-Di-(p-hydroxyphenyl)-alkane sind beispielsweise die Säurechloride der Bernsteinsäure, Methylbernsteinsäure, Glutarsäure, 2-Methyl- oder 3-Methylglutarsäure, 3,3-Dimethylglutarsäure, Adipinsäure, 3-Methyladipinsäure, Pimelinsäure, Sebacinsäure, Nonan-, Decan-, Undecan- und Tetradecandicarbonsäure.

Die erfindungsgemässen Polyätherharze können in der für Thermoplasten üblichen Weise eingesetzt und verarbeitet werden. Sie können beispielsweise als Press-, Überzugs- oder Beschichtungsmassen oder zur Herstellung von Filmen Verwendung finden. Vor dem Applizieren können den als Presspulver, Schmelzen oder Lösungen in einem üblichen organischen Lösungsmittel vorliegenden Polyätherharzen die üblichen Zusatzstoffe, wie beispielsweise Füllstoffe, Pigmente, Stabilisatoren oder Verstärkungsmittel, wie Kohlenstoff-, Bor- oder Glasfasern, zugegeben werden. Die erfindungsgemässen Polyätherharze können auch zusammen mit anderen Thermoplasten, wie beispielsweise Polyester, Polyamide, Polyimide, Polyolefine oder Polyurethane, insbesondere mit den konventionellen Polyätherharzen, verarbeitet werden.

Vorzugsweise eignen sich die erfindungsgemässen Polyätherharze als Matrixharze für die Herstellung von Faserverbundsystemen, wobei man als Verstärkungsfasern die üblichen bei der Faserverstärkung von Werkstoffen verwendeten Fasern einsetzen kann. Diese können organische oder anorganische Fasern, Naturfasern oder Synthesefasern, wie Aramid-Fasern, sein und als Faserbündel oder Endlosfasern vorliegen. Beispielsweise verwendet man als Verstärkungsfasern Glas-, Asbest-, Bor-, Kohlenstoff- und Metallfasern, vorzugsweise Kohlenstoff- und Metallfasern. Solche Fasern und Gewebe daraus sind im Handel erhältlich.

Wie eingangs erwähnt, können die erfindungsgemässen Polyätherharze thermisch oder durch Bestrahlen mit energiereichen elektromagnetischen Strahlen vernetzt werden.

Gegenstand vorliegender Erfindung sind somit auch die durch Vernetzung der erfindungsgemässen Polyätherharze erhaltenen Produkte.

Zur thermischen Vernetzung der Polyätherharze ist eine Temperatur von mindestens 250 °C erforderlich. Die thermische Vernetzung kann gegebenenfalls in Gegenwart von Radikalbildnern, z.B. anorganischen oder organischen Peroxiden, wie Kaliumperoxidsulfat oder Benzoylperoxid, Azoverbindungen, wie Azoisobutyronitril, organischen Hydroperoxiden, α-Halogenacetophenonen, Benzoin oder dessen Äthern, Benzophenonen, Benzilacetalen, Anthrachinonen, Arsinen, Phosphinen oder Thioharnstoffen, vorgenommen werden.

Die Vernetzung der erfindungsgemässen Polyätherharze mittels energiereichen Strahlen kann zum Beispiel mit Röntgenstrahlen, beschleunigten Elektronen oder von einer $^{60}$Co-Quelle ausgesandten γ-Strahlen vorgenommen werden.

Durch die Vernetzung der erfindungsgemässen Polyätherharze erhält man in gebräuchlichen organischen Lösungsmitteln nicht mehr lösliche Polymere, die sich ausserdem durch eine bedeutend höhere Glasumwandlungstemperatur auszeichnen.

Herstellung von 1,6-Bis-(4-hydroxyphenyl)-hexan

a) In einem Kolben werden 500 ml Nitrobenzol vorgelegt und darin 399,9 g Aluminiumchlorid unter Rühren eingetragen. Dann gibt man 227,1 g (2,1 Mol) Anisol zu. Unter Rühren und Kühlen auf 15 bis 20 °C werden innerhalb von 2 h 183,0 g (1,0 Mol) Adipinsäuredichlorid zugetropft, wobei eine HCl-Gasentwicklung einsetzt. Anschliessend wird die Reaktionslösung noch so lange weitergerührt, bis die HCl-Gasentwicklung beendet ist. Das Reaktionsprodukt wird 5 mal in 2 l Wasser gewaschen und anschliessend mittels Wasserdampfdestillation aus der organischen, nitrobenzolhaltigen Phase isoliert. Es werden 322,8 g (98,9% der Theorie) 1,6-Bis-(4-methoxyphenyl)-hexandion mit einem Schmelzpunkt von 143–145 °C erhalten.

b) 212,2 g (0,65 Mol) 1,6-Bis-(4-methoxyphenyl-hexandion werden in 500 ml Toluol unter Rühren auf 80 °C erwärmt. Dann gibt man 520 g amalgamierte Zinkspäne zu sowie 150 ml Wasser und 500 ml Salzsäure, wobei eine $H_2$-Gasentwicklung einsetzt. Nach Abklingen der Gasentwicklung wird die Reaktionslösung über Nacht am Rückfluss leicht gekocht. Nach der Filtration wird die von der organischen Phase abgetrennte wässrige Phase mit 200 ml Toluol ausgeschüttelt. Die organischen Phasen werden vereinigt und der fraktionierten Destillation unterworfen. Es werden 412,6 g (69,1% der Theorie) 1,6-Bis-(4-methoxyphenyl)-hexan als praktisch farblose Kristalle erhalten.

c) In einem Kolben werden 64,0 g (0,21 Mol) 1,6-Bis-(4-methoxyphenyl)-hexan, 107,4 g Bromwasserstoffsäure (48%ig) und 281,2 g reine Essigsäure vorgelegt, und unter einer $N_2$-Atmosphäre wird die dicke Suspension langsam zum leichten Rückfluss erwärmt. Die klare Reaktionslösung wird dann über Nacht am Rückfluss gekocht. Nach Abkühlen auf Raumtemperatur wird die leicht braunrote Lösung unter Rühren in 3 l Wasser gegeben. Der erhaltene Niederschlag wird filtriert, mit destilliertem Wasser neutral gewaschen und im Vakuum bei 70 bis 80 °C getrocknet. Es werden 55,6 g (97,9% der Theorie) 1,6-Bis-(4-hydroxyphenyl)-hexan mit einem Schmelzpunkt von 143–144 °C erhalten.

Beispiel 1

13,52 g (0,050 Mol) 1,6-Bis-(4-hydroxyphenyl)-hexan, 13,52 g (0,0470 Mol) 4,4'-Dichlordiphenylsulfon, 54 ml Dimethylsulfoxid (p.a.) und 140 ml Chlorbenzol (puriss.) werden in einer Apparatur,

bestehend aus einem trockenen, sauberen, stets mit $N_2$ gespülten 4-Halskolben mit Impeller-Rührer, Rückflusskühler, $N_2$-Einleitung und Wasserabscheider, vorgelegt. Man erhält eine klare Lösung, die unter Rühren auf 70 °C aufgeheizt wird. Bei dieser Temperatur werden 8,0 g (0,10 Mol) 50,5%ige wässrige Natronlauge zugegeben. Innerhalb von etwa einer Stunde wird das Reaktionsgemisch auf die eigentliche Reaktionstemperatur von 155–160 °C langsam aufgeheizt. Während dieser Aufheizperiode destillieren Wasser und Chlorbenzol vollständig ab. Nach 1 h Reaktionszeit bei 157–158 °C wird mit 150 ml Chlorbenzol verdünnt. Das während der Reaktion gebildete Natriumchlorid fällt in sehr feiner Form aus. Es wird durch Filtration isoliert, getrocknet und gewogen. Die Menge entspricht praktisch 100% der Theorie, die Reinheit war >98% (Silbernitrat-Titration). Die klare Lösung des Polymers in Dimethylsulfoxid wird unter sehr gutem Rühren in 2 l Methanol getropft. Das ausgefallene Polymer wird nach der Filtration im Vakuum und Hochvakuum bei 60 °C bis zur Gewichtskonstanz getrocknet. Ausbeute: 25,7 g (95,0% der Theorie).

Kenndaten des Polymeren:

$\eta_{sp}$ = 1,05 (2,0%ige Lösung in Dimethylformamid bei 30 °C)

$\overline{M}n$ = 23318

Es ist allgemein bekannt, dass das Molekulargewicht unter anderem über das Verhältnis der Kondensationspartner sowie über das Verhältnis Monomeren/Lösungsmittel sich steuern lässt. Entsprechende Zahlen für das vorliegende Beispiel sind:

Verhältnis der Kondensationspartner, ausgedrückt als

| | |
|---|---|
| Mol-% 4,4'-Dichlordiphenylsulfon | = 94% |
| Monomerenkonzentration, g/100 ml Dimethylsulfoxid | = 50,1 |

Beispiel 2

6,76 g (0,025 Mol) 1,6-Bis-(4-hydroxyphenyl)-hexan, 11,41 g (0,050 Mol) Bisphenol A, 21,33 g (0,07425 Mol) 4,4'-Dichlordiphenylsulfon, 65,0 ml Dimethylsulfoxid (puriss.) und 210 ml Chlorbenzol (puriss.) werden in der in Beispiel 1 verwendeten Apparatur vorgelegt und analog Beispiel 1 polykondensiert, wobei diesmal 12,0 g (0,150 Mol) 50%ige wässrige Natronlauge zugegeben werden. Ausbeute: 34,7 g (90,0% der Theorie).

Kenndaten des Polymeren:

$\eta_{sp}$ = 1,25 (2,0%ige Lösung in Dimethylformamid bei 30 °C)

$\overline{M}n$ = 22700

Verhältnis der Kondensationspartner, ausgedrückt als

| | |
|---|---|
| Mol-% 4,4'-Dichlordiphenylsulfon | = 99% |
| Monomerenkonzentration, g/100 ml Dimethylsulfoxid | = 60,8 |

Beispiel 3

6,76 g (0,025 Mol) 1,6-Bis-(4-hydroxyphenyl)-hexan, 10,04 g (0,050 Mol) Bisphenol F, 21,33 g (0,07425 Mol) 4,4'-Dichlordiphenylsulfon, 65,0 ml Dimethylsulfoxid (puriss.), 210 ml Chlorbenzol (puriss.) und 12 g (0,15 Mol) 50%ige Natronlauge werden in der in Beispiel 1 verwendeten Apparatur vorgelegt und analog Beispiel 1 polykondensiert. Ausbeute: 29,4 g Polymer mit einer $\eta_{sp}$ von 1,49, gemessen an einer 2%igen Lösung in Dimethylformamid bei 30 °C.

Beispiel 4

6,76 g (0,025 Mol) 1,6-Bis-(4-hydroxyphenyl)-hexan, 10,04 g (0,050 Mol) technisch hergestelltes Bisphenol F (Isomerengemisch), 21,33 g (0,07425 Mol) 4,4'-Dichlordiphenylsulfon, 65,0 ml Dimethylsulfoxid (puriss.), 210 ml Chlorbenzol (puriss.) und 12 g (0,15 Mol) 50%ige Natronlauge werden in der in Beispiel 1 verwendeten Apparatur vorgelegt und analog Beispiel 1 polykondensiert.

Ausbeute: 29,6 g Polymer mit einer $\eta_{sp}$ von 1,32, gemessen an einer 2%igen Lösung in Dimethylformamid bei 30 °C.

Beispiel 5

6,76 g (0,025 Mol) 1,6-Bis-(4-hydroxyphenyl)-hexan, 11,41 (0,050 Mol) Bisphenol A (98,3%ig rein), 18,8 g (0,07425 Mol) 4,4'-Dichlorbenzophenon, 65,0 ml Dimethylsulfoxid (puriss.) und 210 ml Chlorbenzol (puriss.) werden in einem mit $N_2$ gespülten Reaktionsgefäss vorgelegt und auf 75 °C erhitzt. Bei 71 °C werden zur klaren gelben Lösung 12,0 g (0,15 Mol) 50%ige Natronlauge zugegeben. Nach wenigen Minuten wird die Lösung bei 74 °C dunkel und trübe. Die Temperatur wird dann während etwa 2 h langsam auf die eigentliche Reaktionstemperatur von etwa 160 °C erhöht. Während dieser Aufheizperiode destillieren zunächst Wasser und Chlorbenzol azeotrop und anschliessendes Chlorbenzol allein ab. Nach einer Reaktionszeit von 4,25 h bei 156–160 °C wird mit 200 ml Chlorbenzol verdünnt und anschliessend bei 80 °C vom bei der Polykondensation gebildeten NaCl abfiltriert. Die klare, dunkelbraune Lösung wird dann unter gutem Rühren in 3 l Methanol eingetropft, wobei ein beigefarbiges Polymer in recht feiner, nichtklebriger Form ausfällt. Nach der Filtration wird im Vakuum, dann im Hochvakuum bei 70–80 °C getrocknet. Ausbeute: 29,1 g Polymer mit einer $\eta_{sp}$ von 0,35, gemessen an einer 2%igen Lösung in Dimethylformamid bei 30 °C.

Beispiel 6

Vernetzung der Polymeren

Die Vernetzung der Polymeren wird durch eine thermische Behandlung bei 250 °C erzielt. Entsprechende Angaben sind in der nachfolgenden Tabelle zusammengefasst.

| Polymer nach Beispiel | Polymer tel quel | | Thermische Behandlung | Polymer nach therm. Behandlung | |
|---|---|---|---|---|---|
| | Tg (TBA)* | MEK-**Beständigkeit | | Tg (TBA) | MEK-Beständigkeit |
| 1 | 106 °C | löslich | 6h/250 °C | 209 °C | unlöslich |
| 2 | 142 °C | löslich | 7h/250 °C | 183 °C | unlöslich |
| 3 | 143 °C | löslich | 3h/250 °C | 177 °C | unlöslich |
| 4 | 138 °C | löslich | 3h/250 °C | 188 °C | unlöslich |
| | | | 1h/250 °C<br>1h/280 °C | 285 °C | unlöslich |
| 5 | 109 °C | löslich | 5h/250 °C | 167 °C | unlöslich |

*) TBA = Torsional Braid Analysis
**) MEK = Methyläthylketon

Die markante Zunahme bei der Glasumwandlungstemperatur sowie vor allem die Tatsache, dass die Polymere nach der thermischen Behandlung in MEK unlöslich sind, weisen auf eine Vernetzung hin.

**Patentansprüche**

1. Vernetzbare, lineare Polyätherharze mit einer spezifischen Viskosität von 0,1 bis 2,5, gemessen bei 30 °C an einer 2%igen Lösung in Dimethylformamid, die, bezogen auf die Gesamtmenge der im Polyätherharz vorhandenen Strukturelemente, 100 bis 10 Mol-% des wiederkehrenden Strukturelementes der Formel I

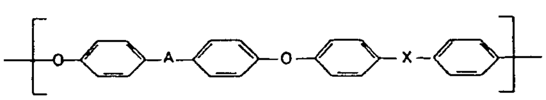 (I)

und 90 bis 0 Mol-% des wiederkehrenden Strukturelementes der Formel II

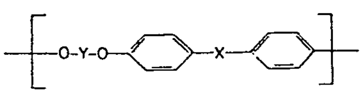 (II)

enthalten, worin A ein lineares unsubstituiertes oder methylsubstituiertes Alkylen mit 4 bis 100 C-Atomen in der linearen Alkylenkette beteutet, X

fur $-SO_2-$, -CO-, -SO-, -N=N-, $-CF_2-CF_2-$, 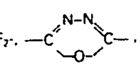 ,

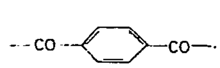 , 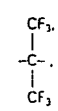 , -CH=CH-, 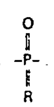 ,

worin R ein Alkyl mit 1 bis 8 C-Atomen bedeutet, oder

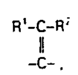 ,

worin R' und $R^2$ je ein H- oder Halogenatom bedeuten, steht und
Y einen Rest der Formel III oder IV

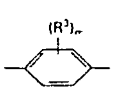 (III) oder 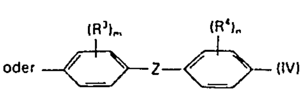 (IV)

bedeutet, worin $R^3$ und $R^4$ gleich oder verschieden sind und je ein Halogenatom, Alkyl mit 1 bis 4 C-Atomen oder Alkoxy mit 1 bis 4 C-Atomen, m und n null oder eine ganze Zahl von 1 bis 4 bedeuten und Z für eine direkte Bindung oder einen der folgenden Reste

-O-, -SO-, $-SO_2-$, -S-, -S-S-, 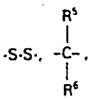 ,

worin $R^5$ und $R^6$ unabhängig voneinander je ein H-Atom, Alkyl mit 1 bis 4 C-Atomen oder Phenyl bedeuten,

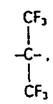 , 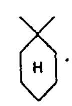 , 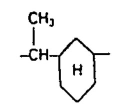 oder 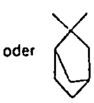 steht.

2. Polyätherharze gemäss Anspruch 1, die 100 bis 20 Mol-% des wiederkehrenden Strukturelementes der Formel I und 80 bis 0 Mol-% des wiederkehrenden Strukturelementes der Formel II enthalten.

3. Polyätherharze gemäss Anspruch 1, die 50 bis 30 Mol-% des wiederkehrenden Strukturelementes der Formel I und 70 bis 50 Mol-% des wiederkehrenden Strukturelementes der Formel II enthalten.

4. Polyätherharze gemäss Anspruch 1, worin der Rest A in Formel I ein unsubstituiertes Alkylen und 4 bis 20 C-Atomen in der linearen Alkylenkette bedeutet.

5. Polyätherharze gemäss Anspruch 1, worin der Rest X in Formel I und II für

$-SO_2-$, -CO-, -SO-, $-CF_2-CF_2-$, 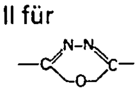 , -N=N-,

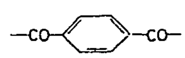 oder 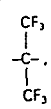 , steht

6. Polyätherharze gemäss Anspruch 1, worin Y in Formel II für einen Rest der Formel III oder IV, worin m und n null bedeuten und Z für eine direkte Bindung oder einen der folgenden Reste

-O-, -SO-, $-SO_2-$, -S-, -S-S-, $-CH_2-$, 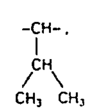 ,

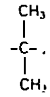 , 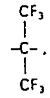 , 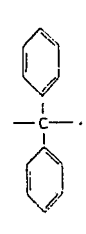 , 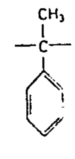 .

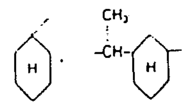 oder 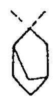 steht

7. Polyätherharz gemäss Anspruch 1, bestehend nur aus dem Strukturelement der Formel I, worin A für Hexamethylen und X für Sulfonyl stehen.

8. Polyätherharz gemäss Anspruch 1, enthaltend die Strukturelemente der Formel I und II, worin A für Hexamethylen, X für Sulfonyl und Y für

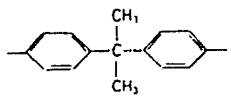 steht.

9. Verfahren zur Herstellung von Polyätherharzen gemäss Anspruch 1, enthaltend die wiederkehrenden Strukturelemente der Formeln I und II, dadurch gekennzeichnet, dass man eine Dihalogenverbindung der Formel V

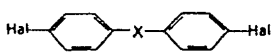 (V)

in äquimolaren Mengen mit einem α ω-Di-(p-hydroxyphenyl)-alkan der Formel VI

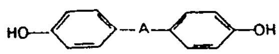 (VI)

oder mit einem Gemisch aus einer Verbindung der Formel VI und einem darin bis zu 90 Mol-% enthaltenden Phenol der Formel VII

HO-Y-OH (VII)

worin X, A und Y die gleiche Bedeutung wie in Formel I bzw. II haben und Hal für ein Halogenatom steht, in Gegenwart von Alkali in einem polaren aprotischen Lösungsmittel polykondensiert, bis das erhaltene Polyätherharz eine spezifische Viskosität von 0,1 bis 2,5, gemessen bei 30 °C an einer 2%igen Lösung in Dimethylformamid, aufweist.

10. Die durch Vernetzung der Polyätherharze gemäss Anspruch 1 durch Erhitzen auf mindestens 250 °C oder durch Bestrahlen mit energiereichen elektromagnetischen Strahlen erhaltenen Produkte.

**Claims**

1. A crosslinkable linear polyether resin having a specific viscosity of 0.1 to 2.5, measured at 30 °C on a 2% solution in dimethylformamide, and containing, based on the total amount of structural elements present in the polyether resin, 100 to 10 mol-% of the repeating structural element of the formula I

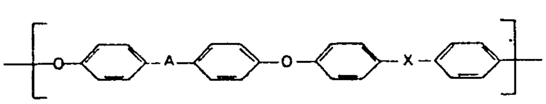 (I)

and 90 to 0 mol-% of the repeating structural element of formula II

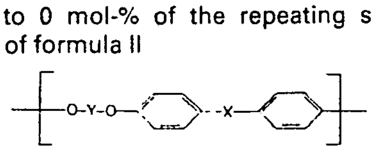 (II)

in which A is a linear unsubstituted or methyl-substituted alkylene having 4 to 100 carbon atoms in the linear alkylene chain, X is

$-SO_2-$, $-CO-$, $-SO-$, $-N=N-$, $-CF_2-CF_2-$, 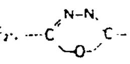

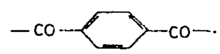 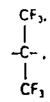 $-CH=CH-$, 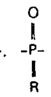

wherein R is alkyl having 1 to 8 carbon atoms, or is

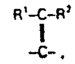

wherein each of $R^1$ and $R^2$ is a hydrogen or a halogen atom, and Y is a radical of the formula III or IV

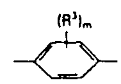 (III) or 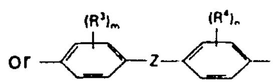 (IV)

wherein $R^3$ and $R^4$ are the same or different and each is a halogen atom, alkyl having 1 to 4 carbon atoms or alkoxy having 1 to 4 carbon atoms, m and n are 0 or an integer from 1 to 4, and Z is a direct bond or one of the following

$-O-$, $-SO-$, $-SO_2-$, $-S-$, $-S-S-$, 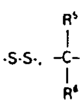

wherein each of $R^5$ and $R^6$ independently of the other is a hydrogen atom, alkyl having 1 to 4 carbon atoms or phenyl, or is

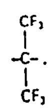 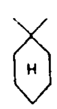 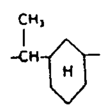 or 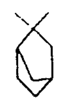

2. A polyether resin according to claim 1, which contains 100 to 20 mol-% of the repeating structural element of the formula I and 80 to 0 mol-% of the repeating structural element of the formula II.

3. A polyether resin according to claim 1, which contains 50 to 30 mol-% of the repeating structural element of the formula I and 70 to 50 mol-% of the repeating structural element of the formula II.

4. A polyether resin according to claim 1, wherein the radical A in formula I is an unsubstituted alkylene group containing 4 to 20 carbon atoms in the linear alkylene chain.

5. A polyether resin according to claim 1, wherein the radical X in formula I and II is

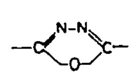 $-N=N-$, 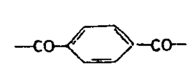 or 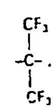

6. A polyether resin according to claim 1, wherein Y in formula II is a radical of the formula III or IV, wherein m and n are 0 and Z is a direct bond or one of the following radicals

$-O-$, $-SO-$, $-SO_2-$, $-S-$, $-S-S-$, $-CH_2-$, 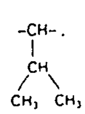

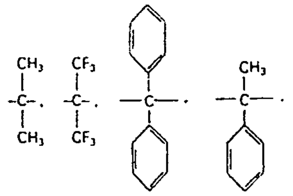

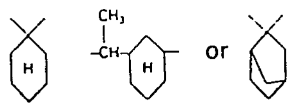

7. A polyether resin according to claim 1, said resin consisting only of the structural element of the formula 1, wherein A is hexamethylene and X is sulfonyl.

8. A polyether resin according to claim 1, said resin containing the structural elements of the formulae I and II, wherein A is hexamethylene, X is sulfonyl and Y is

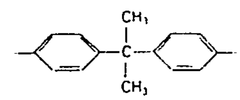

9. A process for the preparation of a polyether resin according to claim 1 and containing the repeating structural elements of the formulae I and II, which process comprises polycondensing a dihalo compound of the formula V

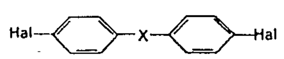 (V)

in equimolar amounts, with an α,ω-di-(p-hydroxy-phenyl)-alkane of the formula VI

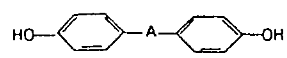 (VI)

or with a mixture of a compound of the formula VI and a phenol contained therein in an amount of up to 90 mol-%, of the formula VII

HO-Y-OH (VII)

wherein X, A and Y are as defined in formula I or II and Hal is a halogen atom, in the presence of alkali and in a polar aprotic solvent, until the resultant polyether resin has a specific viscosity of 0.1 to 2.5, measured at 30 °C on a 2% solution in dimethylformamide.

10. A product obtained by crosslinking a polyether resin according to claim 1 by heating said resin to not less than 250 °C or by irradiating it with high-energy electromagnetic rays.

**Revendications**

1. Résines polyéthers linéaires réticulables dont la viscosité spécifique, mesurée à 30 °C sur une solution à 2% dans du diméthylformamide, est comprise entre 0,1 et 2,5, résines qui contiennent, par rapport à la quantité totale des unités structurales présentes dans la résine polyéther, de 100 à 10% en moles de l'unité structurale répétée de formule I:

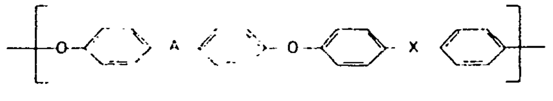 (I)

et de 90 à 0% en moles de l'unité structurale répétée de formule II:

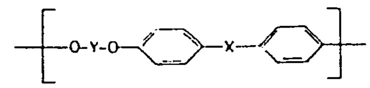 (II)

formules dans lesquelles:

A représente un radical alkylène linéaire, non substitué ou porteur d'un méthyle et dont la chaîne alkylène linéaire contient de 4 à 100 atomes de carbone, X représente

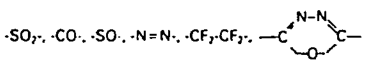

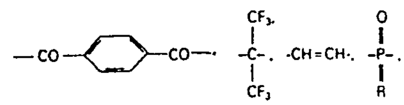

(où R désigne un alkyle contenant de 1 à 8 atomes de carbone) ou

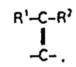

(où $R^1$ et $R^2$ représentent chacun un atome d'hydrogène ou d'halogène) et

Y représente un radical répondant à l'une des formules III et IV:

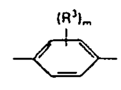 (III) 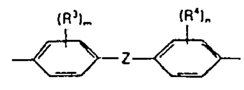 (IV)

dans lesquelles $R^3$ et $R^4$ représentent chacun, indépendamment l'un de l'autre, un atome d'halogène, un alkyle en $C_1$–$C_4$ ou un alcoxy en $C_1$–$C_4$, m et n représentent chacun un nombre entier de 0 à 4 et Z représente une liaison directe ou un radical

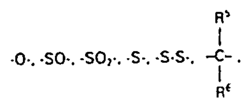

(dont les symboles $R^5$ et $R^6$ représentent chacun, indépendamment l'un de l'autre, un atome d'hydrogène, un alkyle en $C_1$–$C_4$ ou un phényle)

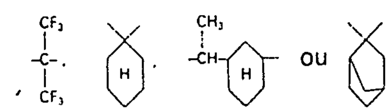

2. Résines polyéthers selon la revendication 1 qui contiennent de 100 à 20% en moles de l'unité structurale répétée de formule I et de 80 à 0% en moles de l'unité structurale répétée de formule II.

3. Résines polyéthers selon la revendication 1 qui contiennent de 50 à 30% en moles de l'unité structurale répétée de formule I et de 70 à 50% en moles de l'unité structurale répétée de formule II.

4. Résines polyéthers selon la revendication 1 dans lesquelles le symbole A, dans la formule I, représente un radical alkylène non substitué dont la chaîne alkylène linéaire contient de 4 à 20 atomes de carbone.

5. Résines polyéthers selon la revendication 1 dans lesquelles le symbole X, dans les formules I

et II, représente un radical

-$SO_2$-, -CO-, SO-, -$CF_2$-$CF_2$-, 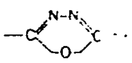, -N=N-,

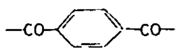 ou 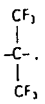

6. Résines polyéthers selon la revendication 1 dans lesquelles le symbole Y, dans la formule II, représentent un radical répondant à l'une des formules III et IV dans lesquelles m et n sont égaux chacun à 0 et Z représente une liaison directe ou l'un des radicaux suivants:

-O-, -SO-, -$SO_2$-, -S-, -S-S-, -$CH_2$-,

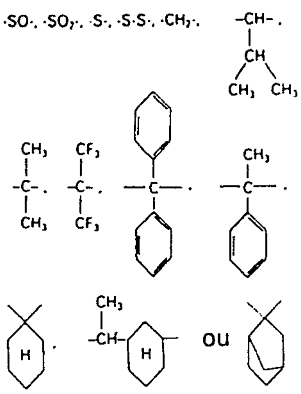

ou

7. Résine polyéther selon la revendication 1 qui n'est constituée que de l'élément structural de formule I dans lequel A représente un radical hexaméthylène et X un radical sulfonyle.

8. Résine polyéther selon la revendication 1 qui contient les éléments structuraux de formules I et II dans lesquels A représente un radical hexaméthylène, X un radical sulfonyle et Y un radical:

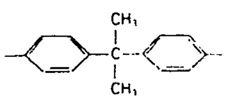

9. Procédé pour préparer des résines polyéthers selon la revendication 1 contenant les éléments structuraux répétés de formules I et II, procédé caractérisé en ce qu'on polycondense un composé dihalogéné de formule V:

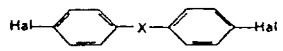 (V)

en quantités équimolaires avec un α,ω-bis-(hydroxy-4-phényl)alcane de formule VI:

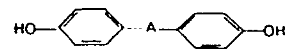 (VI)

ou avec un mélange constitué d'un composé de formule VI et d'un phénol de formule VII contenu dans ledit mélange en une proportion pouvant aller jusqu'à 90% en moles:

HO-Y-OH (VII)

(dans ces formules les symboles X, A et Y ont les mêmes significations que dans les formules I et II, et Hal représente un atome d'halogène), en présence d'un composé alcalin, dans un solvant aprotique polaire, la polycondensation étant poursuivie jusqu'à ce que la résine polyéther obtenue ait une viscosité spécifique de 0,1 à 2,5, mesurée à 30 °C sur une solution à 2% dans du diméthylformamide.

10. Produits obtenus par réticulation des résines polyéthers selon la revendication 1, au moyen d'un chauffage à une température d'au moins 250 °C ou au moyen d'une irradiation par des rayons électromagnétiques de haute énergie.